# EUROPEAN PATENT SPECIFICATION

(11) **EP 3 650 380 B1**
(45) Date of publication and mention of the grant of the patent: **07.12.2022**
(21) Application number: 19202915.5
(22) Date of filing: 14.10.2019
(51) Int. Cl.: B65G 47/76, B65G 47/82, B65G 47/71

(54) **STORAGE SYSTEM FOR STORING CONTAINERS**
LAGERSYSTEM ZUM LAGERN VON BEHÄLTERN
SYSTÈME POUR LE STOCKAGE DE CONTENEURS

(30) Priority: 07.11.2018 IT 201800010133
(43) Date of publication of application: 13.05.2020
(73) Proprietor: Silva S.r.l. Congegni Industriali, 43010 Langhirano Parma (IT)
(72) Inventor: SILVA, Mauro, 43010 Langhirano (IT)
(74) Representative: Monelli, Alberto

(56) References cited:
- EP-A1- 1 702 870
- WO-A1-02/072455
- WO-A1-2016/023135
- DE-A1- 3 923 549
- JP-A- S5 957 814
- JP-U- S5 280 970
- NL-C2- 1 024 838
- US-A- 1 481 542

## Description

The present invention relates to a temporary storage system for storing containers, in particular glass containers or other containers having an unstable shape and therefore subject to overturning/falling in the case of bumps, uncontrolled storage or sudden accelerations. In particular, the present invention relates to a loading system for the temporary storage of containers.

Glass container production systems are known. After production, they are sent to a packing station. In order to manage any clogging along the line that passes from production to the packing station, it is known to provide storage tables (storage pallets). In particular, a solution is known in which a baffle and/or a loading bar is placed. In a disengaged configuration it does not interfere with the containers that pass along a feeding line. In an operating configuration it surmounts the feeding line and deviates the containers towards a storage table placed laterally to the feeding line. The passage in the operating configuration takes place when the storage of containers on the storage table should begin.

A drawback of this solution is related to the fact that the contact between the containers and the baffle or between the various containers that as a result of the action of the baffle gather on the storage table lead to an increase in the risk of overturning/falling and consequent scratches or damage to the containers.

Systems for conveying containers according to the preamble of claim 1 are disclosed by WO 2016/023135 and JP S59 57814.

In this context, the technical task underlying the present invention is to propose a storage system that allows minimising the damage to the containers as well as optimising the distribution of the containers along the storage table.

The defined technical task and the specified aims are substantially achieved by a storage system comprising the technical characteristics set forth in one or more of the appended claims.

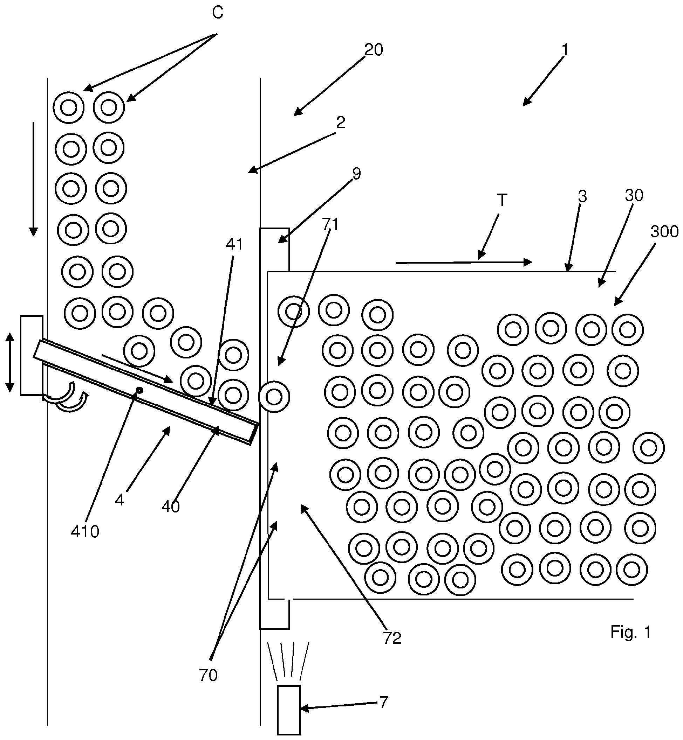

Further characteristics and advantages of the present invention will become more apparent from the approximate and thus non-limiting description of a preferred, but not exclusive, embodiment of a storage system as illustrated in the schematic plan view appearing in figure 1.

In the appended figures, the reference number 1 denotes a temporary storage system for storing containers, preferably, but not necessarily of glass.

The use of the storage system is particularly advantageous when the containers have an unstable form, that is, when they easily overturn in the event of a bump, uncontrolled storage or accelerations, for example containers flared upwards (tronco-conical), oval-shaped, square or rectangular or cylindrical items having a considerable extension in height.

Some of the containers in the figure are indicated by the reference "C".

The storage system 1 comprises advancement means 2 for advancement of the containers along an advancement line 20.

In the preferred solution, the advancement means 2 comprises a conveyor belt. This conveyor belt conveys the containers which are supported above the same. Extending along its path, the conveyor belt therefore defines the advancement line 20 indicated above.

The storage system 1 further comprises a storage 3. The storage 3 comprises a conveyor 30 which receives the containers coming from the advancement line 20. The conveyor 30 moves transversally to the advancement line 20. In particular, the conveyor 30 moves the containers away from the advancement line 20. The conveyor 30 itself defines the storage 3. In particular, it defines a storage table. In other words, the containers are parked on the conveyor 30 which supports them until they are reintroduced onto the feeding line 20. To do this, the conveyor moves in the opposite direction with respect to the arrow of figure 1 indicated by the reference T.

The system 1 further comprises transfer means 4 for transferring the containers from the advancement means 2 to said storage 3. The transfer means 4 comprises a baffle 40 which at least in one operating configuration extends transversally to the advancement line 20 in order to intercept the containers and displace the containers onto the storage 3. Conveniently, the baffle 40 is a switching arm.

In the operating configuration the baffle 40 extends above the advancement line 20 starting from a support placed laterally to the advancement line 20. This support is located on a side opposite the advancement line 20 with respect to the storage 3. Conveniently the baffle 40 extends above the advancement line 20 starting from a side opposite to the one on which the conveyor 30 is located.

The baffle 40 is movable along the advancement line 20.

In this way, by adjusting the displacement/stopping of the baffle 40 with respect to the displacement/stopping of the conveyor 30 it is still possible to more uniformly distribute the containers along an input zone of the conveyor 30 (the input zone is a portion of the conveyor where the containers arrive from the advancement line 20). This prevents the unwanted assembling of containers in a same zone of the conveyor 30 with the consequent risks of bumps and damage.

According to the invention, the storage system 1 comprises synchronising means for synchronising a displacement of the baffle 40 along the advancement line 2 and a displacement of the conveyor 30 which moves transversally to the advancement line 20. The synchronisation means 7 can for example comprise a control unit.

The baffle 40 comprises a drawing device 41 for drawing the containers which is slidable along a closed line. The closed line along which the drawing device moves 41 circumscribes an imaginary vertical straight line 410. The drawing device 41 comprises a movable element that affects at least part of an external side surface of the baffle 40.

Conveniently the drawing device 41 is an element closed onto itself along a line. For example it is a closed belt or a chain with suitable flights with a high friction coefficient (rubber and/or the like). It preferably has a friction surface intended to intercept the containers and convey them towards the storage 3. The drawing device 41 comprises a first and a second straight portion that are connected at the ends with two curves (or regardless two transversal sections) so as to define a closed line. The rotation direction of the drawing device 41 is such that the straight section intended to face the incoming containers along the feeding line 20 moves towards the storage 3.

The baffle 40 is movable between the operating configuration (see figure 1) in which it surmounts said advancement line 20 and a resting configuration in which it is located externally of the volume defined by the vertical upwards projection of the advancement line 20. In the resting configuration the baffle 40 does not interfere with the containers that are conveyed by the advancement means 2.

Conveniently the baffle 40 can assume a plurality of configurations characterised by a different inclination of said baffle 4 (or better of said switching arm) with respect to the advancement line 20. Conveniently the switching arm has a rectilinear development. The smaller the acute angle interposed between a predominant extension direction of the baffle 40 and of the advancement line 20, the greater the delicacy with which the baffle exerts its action.

In the preferred solution the baffle 40 is slidable along a trajectory parallel to a portion of the advancement line 20. In particular, the baffle 40 can translate along this portion. In particular, the support from which the baffle 40 extends translates along guide means arranged parallel to the advancement line 20.

In a preferred operating mode the baffle 40 moves alternatively in the same direction and in the opposite direction to that of the advancement of the advancement means 2 (which conveniently maintains its direction of displacement unaltered). The baffle 40 therefore moves in an alternating sense at an inlet mouth of the storage 3 intended to receive the containers coming from the advancement line 20.

Conveniently, the system comprises a static transfer plane 9 separating the advancement means 2 from the storage 3; this transfer plane 9 extends longitudinally along the advancement line 20 and preferably has a width (measured orthogonally to the line 20) of less than 5 centimetres. The transfer plane 9 surmounts a portion of the conveyor 30.

In a particular solution, the system 1 can comprise a movable transfer plane that connects the advancement means 2 from the storage 3. The movable transfer plane can move longitudinally along the advancement line 20. This movable transfer plane makes the transfer of the containers from the advancement means 2 to the storage 3 more delicate. Conveniently that which has been described with reference to the static transfer plane 9 can also be repeated for the movable transfer plane.

According to the invention, the storage system 1 comprises detecting means 7 for detecting the presence of containers located on an initial portion 70 of the conveyor 30 which is located in proximity of the advancement line 2. The detecting means 7 can for example comprise means for acquiring an image, for example a camera or a photocell and/or capacitive sonar. In an alternative solution the detecting means 7 can for example comprise means responsive to the weight of the containers.

The synchronisation means are adjusted as a function of the input of said detecting means 7.

The subject matter of the present invention is also a temporary storage method for storing containers (preferably in glass and advantageously empty) through a storage system 1 having one or more of the characteristics previously described.

This method comprises the steps of:
- moving said baffle 40 alternatively along a first and a second direction; the first direction is that of the advancement line 20, the second direction being opposite to the first direction;
- deviating, by means of said baffle 40, the containers coming from the feeding line 20 towards the storage 3; the step of deviating the containers can at least partly take place simultaneously with the step of moving said baffle 40 along the first or along the second direction;
- moving said conveyor 30 in order to distance the containers located on the conveyor 30 and which are nearest to the advancement line 20 in order to free up space in an initial portion 70 of the conveyor 30 so as to be able to receive new containers coming from the advancement line 20.

The step of moving the baffle 40 can alternatively be carried out as a function of an input coming from the detecting means 7 or as a function of a predetermined handling logic.

For example, during the step of moving the baffle along the first direction the baffle does not contact the containers that are moving on the feeding line 20. In this regard the baffle is located in front of them and moves with them. During the step of moving the baffle along the second direction, the baffle deviates the containers located along the feeding line 20 towards the storage 3.

The operating logic of the baffle is adjustable through an electronic control system. It can be controlled through a user interface that allows multiple operating modes.

For example the method can comprise the step of identifying a first zone 71 on the conveyor 30 without containers and forming part of an initial portion 70 of the conveyor 30 which is located behind/near the advancement line 20. This step of identifying the first zone 71 takes place through suitable detecting means, for example of the type described above: the means for acquiring an image or a photocell, capacitive sonar or weight sensors, etc.

The method then comprises the step of displacing the baffle 40 at said first zone 71; conveniently the baffle 40 is aligned with the first zone 71 orthogonally to the advancement line 20.

The method then comprises the step of intercepting the containers moving along the advancement line 20 and deviating them in said first zone 71.

Periodically the conveyor 30 is moved in order to distance the containers which are nearest to the advancement line 20 in order to free up space in the initial portion 70 of the conveyor 30 so as to be able to receive new containers coming from the advancement line 20. Conveniently, the conveyor 30 is/comprises a conveyor belt 300 which moves transversally to the advancement line 20. In the preferred solution in which the conveyor 30 comprises a conveyor belt, the above-described step of moving the conveyor 30 comprises the step of moving the conveyor 30.

The method further comprises the step of identifying a second zone 72 on the conveyor 30 forming part of said initial portion 70 of the conveyor 30 and which is free of containers; the step of identifying the second zone 72 on the conveyor advantageously takes place through the detecting means used for identifying the first zone 71.

Conveniently the method further comprises the step of displacing the baffle 40 at said second zone 72. This takes place by aligning a part of the baffle and the second zone 72 orthogonally to the advancement line 20.

The method further comprises the step of intercepting, through the baffle 40, the containers along said advancement line 20 and directing them towards said second zone 72.

In the preferred solution the step of displacing the baffle 40 at said second zone 72 is simultaneous with a step of advancing the containers along the advancement line 20.

The present invention achieves important advantages.

First, it allows an optimal distribution of the containers. In fact, the displacement of the baffle allows distributing the containers for the entire input length of the conveyor 30 without causing a storage of the same in a specific zone. Furthermore, the displacement of the baffle 40 allows better accompanying the containers towards the conveyor while reducing the risk that they may fall (an event that could lead to damaging the containers and normally the need for more space to accommodate an equal number of containers).

The invention as it is conceived is susceptible to numerous modifications and variations, all falling within the scope of the claims. In practice, all the materials used, as well as the dimensions, can be any according to requirements.

## Claims

1. A temporary storage system for storing containers, comprising:
- advancement means (2) for advancement of the containers along an advancement line (20);
- a storage (3) comprising a conveyor (30) which receives the containers coming from the advancement line (20) and moves transversally to the advancement line (20);
- transfer means (4) for transferring the containers from the advancement means (2) to said storage (3); said transfer means (4) comprising a baffle (40) which at least in one operating configuration extends transversally to the advancement line (20) in order to intercept the containers and displace the containers onto the storage (3);
said baffle (40) being movable along the advancement line (20);
**characterised in that** the system comprises:
- synchronising means for synchronising a displacement of the baffle (40) along the advancement line (2) and of the conveyor (30) which moves transversally to the advancement line (20);
- detecting means (7) for detecting the presence of containers located on an initial portion (70) of the conveyor (30) which portion is located in proximity of the advancement line (20); wherein the synchronisation means are adjusted as a function of the input of said detecting means (7).

2. The system according to claim 1, **characterised in that** said baffle (40) comprises a drawing device (41) for drawing the containers which is slidable along a closed line, said drawing device (41) circumscribing an imaginary vertical straight line (410).

3. The system according to any one of the preceding claims, **characterised in that** said baffle (40) is movable between the operating configuration in which it surmounts said advancement line (20) and a resting configuration in which it is located externally of the volume defined by the vertical upwards projection of the advancement line (20).

4. The system according to any one of the preceding claims, **characterised in that** said baffle (40) is slidable along a trajectory parallel to a portion of the advancement line (20).

5. The system according to any one of the preceding claims, **characterised in that** it comprises a movable transfer plane which connects the advancement means (2) for advancement of the storage (3), said transfer plane moving longitudinally along the advancement line (20).

6. The system according to any one of the preceding claims, **characterised in that** in the operating configuration the baffle (40) extends above the advancement line (20) starting from a side opposite to the one on which the conveyor (30) is located.

7. A temporary storage method for storing containers using the storage system (1) according to one or more of claims 1 to 6, comprising the steps of:
- moving said baffle (40) alternatively along a first and a second direction, the first direction being that of the advancement line (20), the second direction being opposite to the first direction;
- deviating, by means of said baffle (40), the containers coming from the feeding line (20) towards the storage (3); the step of deviating the containers at least partly taking place simultaneously with the step of moving said baffle (40) alternatively along a first and a second direction;
- moving said conveyor (30) in order to distance the containers located on the conveyor (30) and which are nearest to the advancement line (20) in order to free up space in an initial portion (70) of the conveyor (30) so as to be able to receive new containers coming from the advancement line (20).

8. The method according to claim 7, **characterised in that** during the step of moving the baffle along the first direction the baffle does not contact the containers that are moving on the feeding line (20), the baffle being located in front of the containers, during the step of moving the baffle (40) along the second direction, the baffle deviates the containers located along the feeding line (20) towards the storage (3).

## Patentansprüche

1. System für die vorübergehende Lagerung zur Lagerung von Behältern, umfassend:
- Vorschubmittel (2) für den Vorschub der Behälter entlang einer Vorschubanlage (20);
- ein Lager (3), umfassend einen Förderer (30), der die von der Vorschubanlage (20) eingehenden Behälter empfängt und sich quer zur Vorschubanlage (20) bewegt;
- Transfermittel (4), um die Behälter von den Vorschubmitteln (2) zum Lager (3) zu transferieren, wobei die Transfermittel (4) ein Ablenkblech (40) umfassen, das sich in mindestens einer Betriebsauslegung quer zur Vorschubanlage (20) erstreckt, um die Behälter abzufangen und die Behälter auf das Lager (3) zu verschieben,
wobei das Ablenkblech (40) entlang der Vorschubanlage (20) verschiebbar ist,
**dadurch gekennzeichnet, dass** das System Folgendes umfasst:
- Synchronisationsmittel zum Synchronisieren einer Verschiebung des Ablenkblechs (40) entlang der Vorschubanlage (2) und des Förderers (30), der sich quer zur Vorschubanlage (20) bewegt;
- Erkennungsmittel (7) zum Erkennen der Anwesenheit von Behältern, die an einem Anfangsabschnitt (70) des Förderers (30) platziert sind, wobei der Abschnitt in der Nähe der Vorschubanlage (20) platziert ist, wobei die Synchronisationsmittel als eine Funktion der Eingabe der Erkennungsmittel (7) geregelt werden.

2. System nach Anspruch 1, **dadurch gekennzeichnet, dass** das Ablenkblech (40) eine Schleppvorrichtung (41) umfasst, um die Behälter zu schleppen, die entlang einer geschlossenen Linie verschiebbar ist, wobei die Schleppvorrichtung (41) eine imaginäre vertikale gerade Linie (410) umschreibt.

3. System nach einem der vorhergehenden Ansprüche, **dadurch gekennzeichnet, dass** das Ablenkblech (40) zwischen der Betriebsauslegung, in der es über der Vorschubanlage (20) liegend angeordnet ist, und einer Ruheauslegung, in der es außerhalb des von der vertikalen Aufwärtsprojektion der Vorschubanlage (20) platziert ist, bewegbar ist.

4. System nach einem der vorhergehenden Ansprüche, **dadurch gekennzeichnet, dass** das Ablenkblech (40) entlang einer Bahn verschiebbar ist, die parallel zu einem Abschnitt der Vorschubanlage (20) angeordnet ist.

5. System nach einem der vorhergehenden Ansprüche, **dadurch gekennzeichnet, dass** es eine bewegbare Transferebene umfasst, die die Vorschubmittel (2) für den Vorschub des Lagers (3) verbindet, wobei sich die Transferebene längsseitig entlang der Vorschubanlage (20) bewegt.

6. System nach einem der vorhergehenden Ansprüche, **dadurch gekennzeichnet, dass** sich das Ablenkblech (40) in der Betriebsauslegung über der Vorschubanlage (20) erstreckt, beginnend von einer Seite, die derjenigen entgegengesetzt angeordnet ist, auf der der Förderer (30) platziert ist.

7. Verfahren für die vorübergehende Lagerung zum Lagern von Behältern unter Nutzung des Lagersystems (1) nach einem oder mehreren der Ansprüche 1 bis 6, umfassend die folgenden Schritte:
- Bewegen des Ablenkblechs (40) pendelnd entlang einer ersten und einer zweiten Richtung, wobei die erste Richtung diejenige der Vorschubanlage (20) ist und die zweite Richtung entgegengesetzt zur zweiten Richtung verläuft;
- Ablenken der von der Zuführungsanlage (20) eingehenden Behälter mittels des Ablenkblechs (40) hinführend zum Lager (3), wobei der Schritt zum Ablenken der Behälter zumindest teilweise simultan mit dem Schritt zum Bewegen des Ablenkblechs (40) pendelnd entlang einer ersten und einer zweiten Richtung stattfindet;
- Bewegen des Förderers (30), um die auf dem Förderer (30) platzierten Behälter, die der Vorschubanlage (20) am nächsten sind, zu beabstanden, um in einem Anfangsabschnitt (70) des Förderers (30) Platz zu schaffen, sodass dieser neue Behälter aufnehmen kann, die von der Vorschubanlage (20) eingehen.

8. Verfahren nach Anspruch 7, **dadurch gekennzeichnet, dass** das Ablenkblech während des Schritts zum Bewegen des Ablenkblechs entlang der ersten Richtung die Behälter, die sich auf der Zuführungsanlage (20) bewegen, nicht berührt, wobei das Ablenkblech vor den Behältern platziert ist und das Ablenkblech (40) die Behälter, die entlang der Zuführungsanlage (20) angeordnet sind, während des Schritts zum Bewegen des Ablenkblechs entlang der zweiten Richtung hinführend zum Lager (3) ablenkt.

## Revendications

1. Système pour le stockage temporaire de conteneurs, comprenant :
- des moyens d'avancement (2) pour faire avancer les conteneurs le long d'une ligne d'avancement (20) ;
- un dispositif de stockage (3) comprenant un convoyeur (30) qui reçoit les conteneurs provenant de la ligne d'avancement (20) et se déplace transversalement à la ligne d'avancement (20) ;
- des moyens de transfert (4) pour transférer les conteneurs des moyens d'avancement (2) audit dispositif de stockage (3) ; lesdits moyens de transfert (4) comprenant un déflecteur (40) qui, au moins dans une configuration de fonctionnement, se prolonge transversalement à la ligne d'avancement (20) afin d'intercepter les conteneurs et de les déplacer sur le dispositif de stockage (3) ;
ledit déflecteur (40) étant mobile le long de la ligne d'avancement (20) ;
**caractérisé en ce que** le système comprend :
- des moyens de synchronisation pour synchroniser un déplacement du déflecteur (40) le long de la ligne d'avancement (2) et du convoyeur (30) qui se déplace transversalement à la ligne d'avancement (20) ;
- des moyens de détection (7) pour détecter la présence de conteneurs situés sur une partie initiale (70) du convoyeur (30), cette partie est située à proximité de la ligne d'avancement (20) ; dans lequel les moyens de synchronisation sont ajustés en fonction de l'entrée desdits moyens de détection (7).

2. Système selon la revendication 1, **caractérisé en ce que** ledit déflecteur (40) comprend un dispositif de soutirage (41) pour soutirer les conteneurs qui est coulissant le long d'une ligne fermée, ledit dispositif de soutirage (41) entourant une ligne droite verticale imaginaire (410).

3. Système selon l'une quelconque des revendications précédentes, **caractérisé en ce que** ledit déflecteur (40) est mobile entre la configuration de fonctionnement dans laquelle il surmonte ladite ligne d'avancement (20) et une configuration de repos dans laquelle il est situé à l'extérieur du volume défini par la projection verticale vers le haut de la ligne d'avancement (20).

4. Système selon l'une quelconque des revendications précédentes, **caractérisé en ce que** ledit déflecteur (40) est coulissant le long d'une trajectoire parallèle à une partie de la ligne d'avancement (20).

5. Système selon l'une quelconque des revendications précédentes, **caractérisé en ce qu'**il comprend un plan de transfert mobile qui relie les moyens d'avancement (2) pour l'avancement du dispositif de stockage (3), ledit plan de transfert se déplaçant longitudinalement le long de la ligne d'avancement (20).

6. Système selon l'une quelconque des revendications précédentes, **caractérisé en ce que**, dans la configuration de fonctionnement, le déflecteur (40) se prolonge au-dessus de la ligne d'avancement (20) à partir d'un côté opposé à celui sur lequel se trouve le convoyeur (30).

7. Procédé de stockage temporaire de conteneurs utilisant le système de stockage (1) selon une ou plusieurs des revendications 1 à 6, comprenant les étapes de :
- déplacer ledit déflecteur (40) alternativement le long d'une première et d'une deuxième direction, la première direction étant celle de la ligne d'avancement (20), la deuxième direction étant opposée à la première direction ;
- dévier, au moyen dudit déflecteur (40), les conteneurs provenant de la ligne d'avancement (20) vers le dispositif de stockage (3) ; l'étape de déviation des conteneurs ayant lieu au moins partiellement simultanément avec l'étape de déplacement dudit déflecteur (40) alternativement le long d'une première et d'une seconde direction ;
- déplacer ledit convoyeur (30) afin d'éloigner les conteneurs situés sur le convoyeur (30) et qui sont les plus proches de la ligne d'avancement (20) afin de libérer de l'espace dans une partie initiale (70) du convoyeur (30) de manière à pouvoir recevoir de nouveaux conteneurs provenant de la ligne d'avancement (20).

8. Procédé selon la revendication 7, **caractérisé en ce que** pendant l'étape de déplacement du déflecteur le long de la première direction, le déflecteur n'entre pas en contact avec les conteneurs qui se déplacent sur la ligne d'avancement (20), le déflecteur étant situé face aux conteneurs, pendant l'étape de déplacement du déflecteur (40) le long de la deuxième direction, le déflecteur dévie les conteneurs situés le long de la ligne d'avancement (20) vers le dispositif de stockage (3).
